# EUROPEAN PATENT APPLICATION

(11) **EP 4 674 323 A2**
(43) Date of publication of application: **07.01.2026**
(21) Application number: 25184307.4
(22) Date of filing: 20.06.2025
(51) Int. Cl.: A47F 1/12, A47F 10/06, A47J 47/16, A47F 7/00

(54) **REMOVABLE CUP HOLDER**

(30) Priority: 02.07.2024 US 202463666778 P
(71) Applicant: Carter-Hoffmann LLC, Mundelein, IL 60060 (US)
(72) Inventor: PUSHPALA, Sreekanth, Mundelein, 60060 (US); RUSSELL, Gary A, Mundelein, 60060 (US)
(74) Representative: Mathys & Squire

(57) **Abstract**

A food service station (10) includes a food-storage container, a removable food- package (26) holder (14), and a package-holder coupler. The food-storage container defines a holding volume (18) that provides a food-storage compartment for food. The removable food-package holder (14) defines a food-package receiving space to provide a food-package compartment for food packages (26). The package-holder coupler couples the food-package holder (14) to the food-storage container.

## Description

### CROSS-REFERENCE TO RELATED APPLICATIONS

This application claims priority from United States Provisional Application No. 63/666,778, filed on July 2, 2024, the entirety of which is hereby incorporated by reference herein.

### BACKGROUND

This disclosure relates to equipment used in a commercial or restaurant kitchen to store packages for food.

### BRIEF SUMMARY

A first representative embodiment of the disclosure is provided. The embodiment includes a food service station. The food service station includes a food-storage container, a removable food-package holder, and a package-holder coupler. The food-storage container includes a base wall and one or more side walls coupled to the base wall to extend upwardly away from the base wall. The one or more side walls are spaced from a center of the base wall to define a holding volume to provide a food-storage compartment. The removable food-package holder includes a magnetic base, a support foundation coupled to the magnetic base to extend outwardly away from the magnetic base, and a package retainer coupled to the support foundation to extend away from the support foundation. The package retainer defines a food-package receiving space to provide a food-package compartment. The package-holder coupler provides a magnetic force to couple the food-package holder to a side wall of the one or more side walls after the food-package holder is placed on the side wall of the one or more side walls so that the food-package holder is retained to the food-storage container with the magnetic force.

Another representative embodiment of the disclosure is provided. The embodiment includes a food service station. The food service station includes a food-storage container, a removable food-package holder, and a package-holder coupler. The food-storage container includes a base wall and a front wall, a rear wall, a left side wall, and a right side wall coupled to the base wall to extend upwardly away from the base wall. The front wall, the rear wall, the left side wall, and the right side wall are spaced from a center of the base wall to define a holding volume to provide a food-storage compartment. The rear wall includes a lower segment coupled to the base wall to extend upwardly away from the base wall and an upper segment coupled to the lower segment to extend laterally away from the lower segment towards the front wall. An inner edge of the upper segment cooperates with upper edges of the front wall, the left side wall, and the right side wall to define an opening of the food-storage compartment. The removable food-package holder includes a magnetic base, a support foundation coupled to the magnetic base to extend upwardly away from the magnetic base, and a package retainer coupled to the support foundation to extend away from the support foundation. The package retainer defines a food-package receiving space to provide a food-package compartment. The package-holder coupler provides a magnetic force to couple the food-package holder to the upper segment of the rear wall while the food-package holder retains one or more packages in the food-package compartment so that a user can remove a package of the one or more packages from the food-package compartment and displace food located in the food-storage compartment into the package removed from the food-package department within a footprint of the food-storage container.

Yet another representative embodiment includes a food-package holder. The food package holder includes a ferrous base, a support foundation, and a package retainer. The support foundation is coupled to the ferrous base to extend outwardly away from the ferrous base. The package retainer is coupled to the support foundation to extend away from the support foundation. The package retainer defines a food-package receiving space to provide a food-package compartment.

Other representative embodiments include the embodiments of the three paragraphs above as combined with the features of one or more of Representative Paragraphs 1-27 provided at the end of this specification.

Advantages of the present disclosure will become more apparent to those skilled in the art from the following description of the preferred embodiments of the disclosure that have been shown and described by way of illustration. As will be realized, the disclosed subject matter is capable of other and different embodiments, and its details are capable of modification in various respects. Accordingly, the drawings and description are to be regarded as illustrative in nature and not as restrictive.

### BRIEF DESCRIPTION OF DRAWINGS

FIG. 1 is a perspective view of a food service station showing that the food service station includes a food-storage container that defines a holding volume to provide a food-storage compartment and removable food-package holders that each define a food-package receiving space to provide a food-package compartment and are removably coupled to a side wall of the food-storage container.
FIG. 2 is a perspective view of the food service station of FIG. 1 with the removable food-package holders removed showing that the food service station further includes a package-holder coupler arranged within the holding volume, the package-holder coupler having magnets engaged with an inner surface of the side wall to provide a magnetic force to couple the food-package holder to the side wall after the food-package holder is placed on the side-wall.
FIG. 3 is a perspective view of the food service station of FIG. 2 with one of the side walls removed showing that the package-holder coupler includes a magnet-support body arranged within the holding volume and having magnet-receiving slots that extend into the magnet-support body, and showing that the magnets are received in a respective one of the magnet-receiving slots.
FIG. 3A is an exploded view of the package-holder coupler of FIG. 3.
FIG. 4 is a section view taken along line 4-4 of the food service station of FIG. 1 showing that the magnet-support body includes an outer surface facing the side wall and an inner surface opposite the outer surface, that the magnet-receiving slots extend into the magnet-support body from the outer surface toward the inner surface, and further showing that the side wall is arranged between the food-package holder and the magnets such that the magnets provide the magnetic force through the side wall to couple the food-package holder to an outer surface of the side wall.
FIG. 5 is a detailed section view of the food-service station of FIG. 4 showing that the outer surface of the magnet-support body is spaced apart from the inner surface of the side wall while the magnet engages the inner surface of the side wall.
FIG. 6 is a top perspective view of the food service station of FIG. 1 with trays removed from the food-storage compartment.
FIG. 7 is a perspective view of the food-package holder of FIG. 1 showing that the food-package holder includes a ferrous base, a support foundation coupled to the ferrous base to extend outwardly away from the ferrous base, and package retainers coupled to the support foundation that each define a food-package receiving space to provide a food-package compartment.
FIG. 7A is a side view of the food-package holder of FIG. 7.
FIG. 8 is a top perspective view of the food-package holder of FIG. 7 showing that each package retainer includes a retainer base coupled to the support foundation, a plurality of guide rods coupled to the retainer base to define the food-package receiving space, and an end-package grip coupled to the retainer base.
FIG. 9 is a perspective view of the food-package holder of FIG. 1 with each package-retainer holding food packages in the food-package compartment.
FIG. 10 is a perspective view of the food-package holder of FIG. 9.'
FIG. 11 is a side view of the food-package holder of FIG. 9.

### DETAILED DESCRIPTION

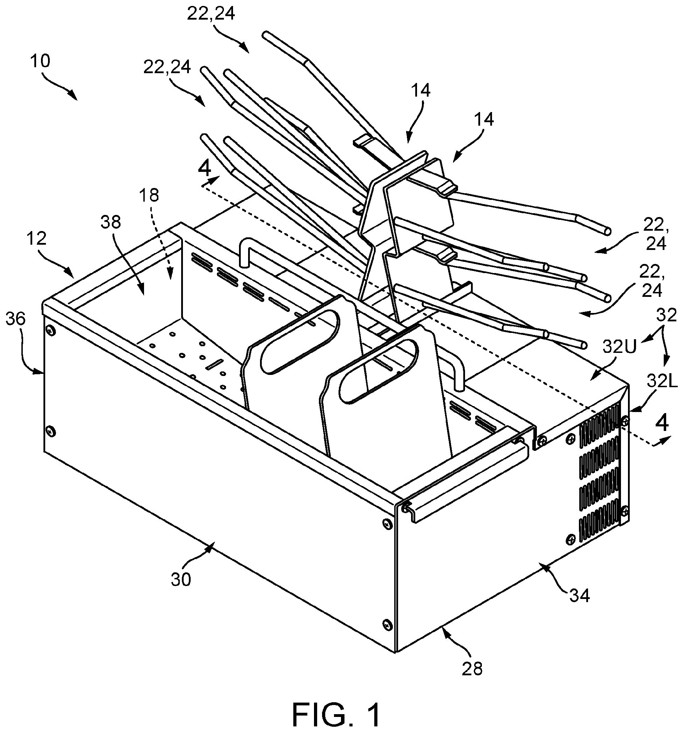

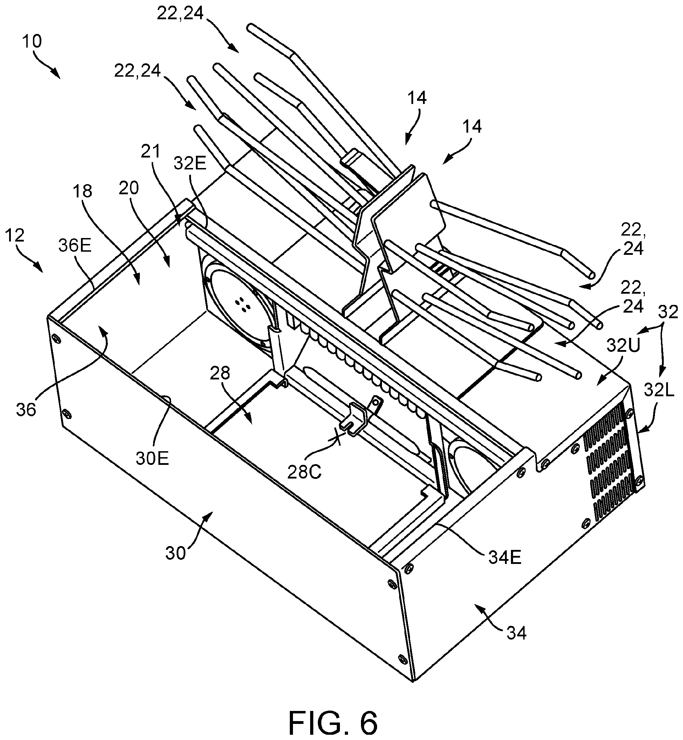

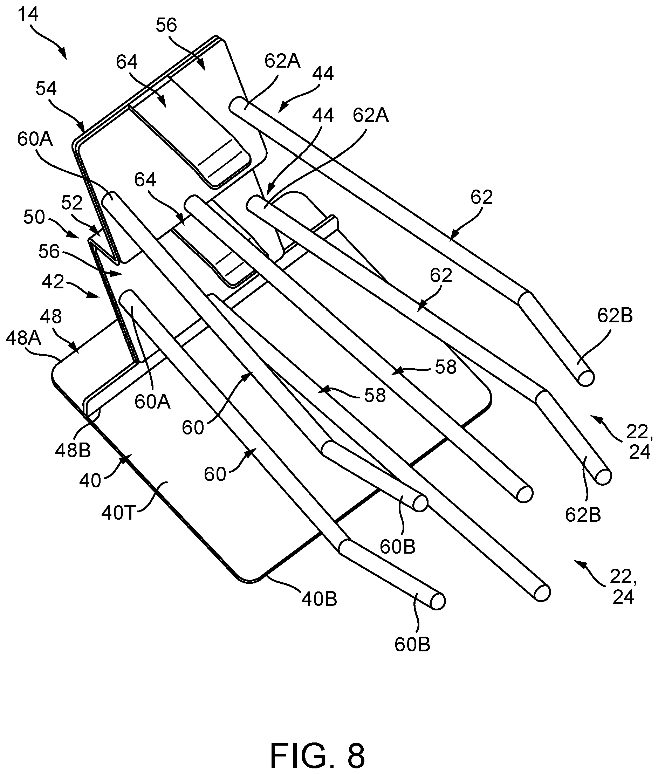

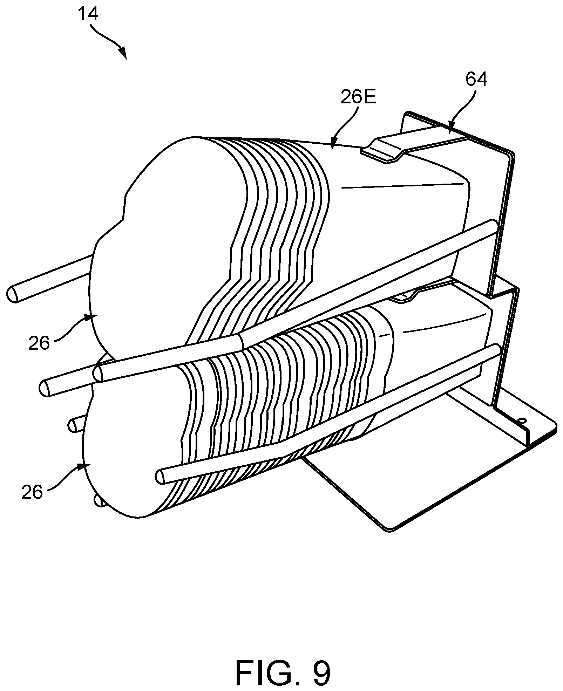

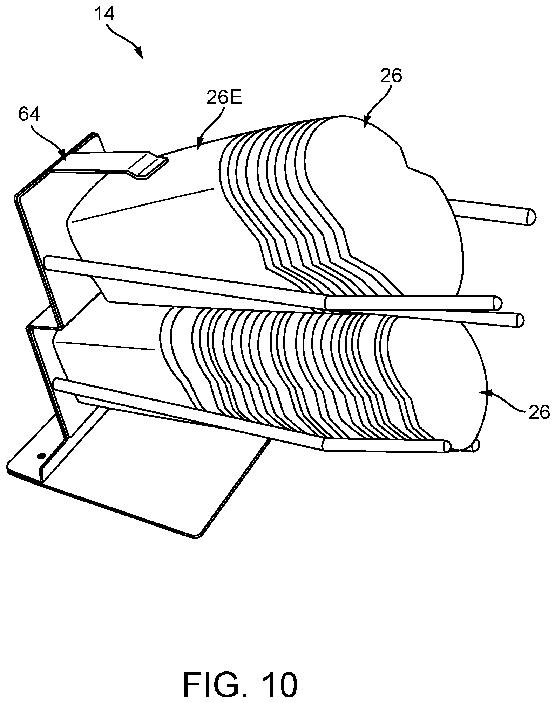

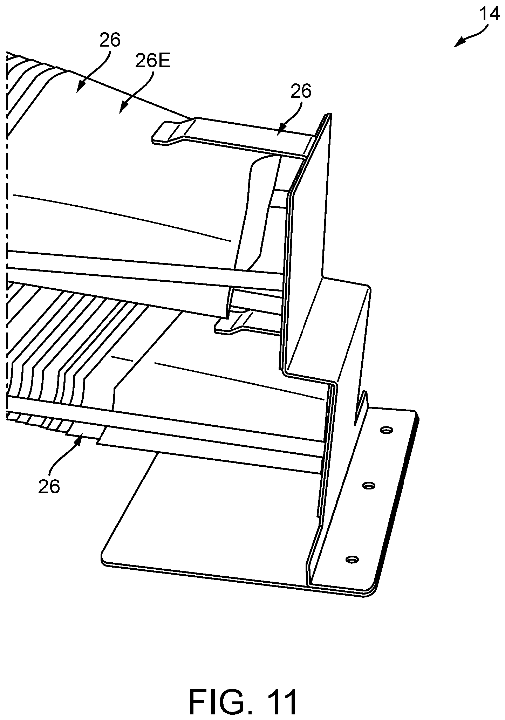

Turning now to FIGs. 1-11, a food service station 10 is provided. The food service station 10 may be provided to hold and store cooked food and food packages 26. A user may remove a food package 26 and displace cooked food into the food package 26 within the footprint of the food service station 10 before distributing the cooked food in the food package 26 to a customer or before further processing the food package 26 within the facility where the food service station 10 is provided. Similarly, the food service station 10 may receive partially cooked food that is intended to be held for a period of time (in a warmed, or cooled condition) until further cooking steps. For example, the food service station 10 may include pre-cooked food that that will be packaged or portioned for serving to a customer in a food package 26 held by the food service station 10 or a different food package, or it may include pre-cooked food that is awaiting self-service by a customer, such as when the food service station 10 is included within a buffet line or similar. The food service station 10 may be configured to rest upon a counter top, or may be configured to be a drop-in style within an aperture in a counter top. The food service station 10 may be permanently mounted to a counter or other structure within a facility, or it may be portable.

The food service station 10 includes a food-storage container 12, removable food-package holders 14, and a package-holder coupler 16 as shown in FIGs. 1-6. The food-storage container 12 defines a holding volume 18 that provides a food-storage compartment 20 for food. Each removable food-package holder 14 defines a food-package receiving space 22 to provide a food-package compartment 24 for food packages 26. The package-holder coupler 18 is coupled to the food-storage container 12 to provide a magnetic force to selectively couple and retain each removable food-package holder 14 to the food-storage container 12 with the magnetic force. In the illustrative embodiment, the food service station 10 includes two removable food-package holders 14. In other embodiments, the food service station 10 includes only one removable food-package holder 14 or more than two removable food-package holders 14.

The food-storage container 12 includes a base wall 28 and one or more side walls 30, 32, 34, 36 coupled to the base 28 as shown in FIGs. 1-3 and 6. The one or more side walls 30, 32, 34, 36 extend upwardly away from the base 28 and are spaced from a center 28C of the base to define the holding volume 18. The one or more side walls 30, 32, 24, 36 include a front wall 30, a rear wall 32, a left side wall 34, and a right side wall 36. The base 28 and the one more side walls 30, 32, 34, 36 comprise non-magnetic material, including but not limited to stainless steel or more specifically stainless steel grade/type 301. The term "wall" as used herein for the base wall 28 and the one or more side walls 30, 32, 34, 36 are used to incorporate a single wall, or wall assemblies that includes two or more components, to establish an outer surface of the food-storage container 12 and an inner surface that directly establishes at least a portion of the holding volume 18 and/or the food-storage compartment 20. In the present disclosure, a side wall may be any wall of the food-storage container 12 that faces upwardly and any wall that faces left or right or has a vector component that faces left or right or fore or aft with respect to the walls of the food storage container 12.

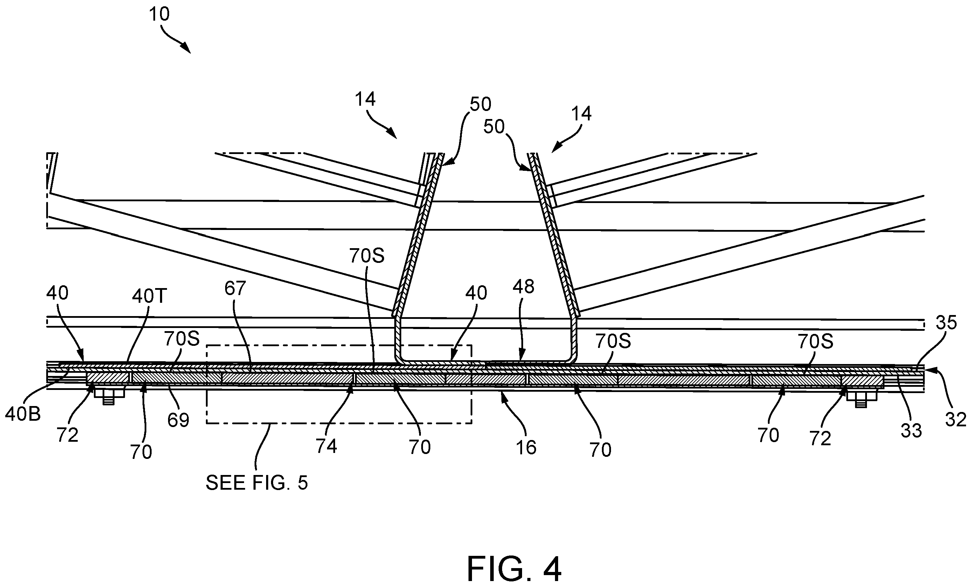

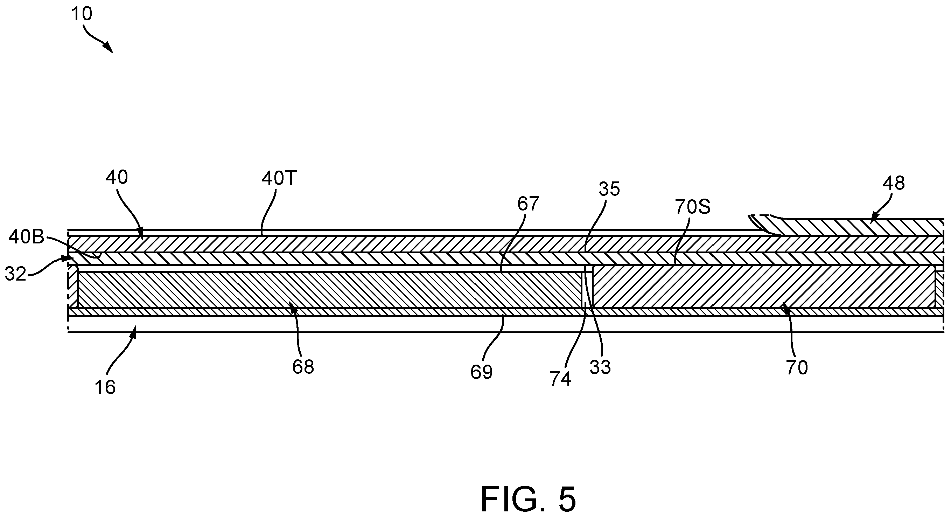

The rear wall 32 includes a lower segment 32L coupled to the base wall and an upper segment 32U coupled to the lower segment 32L as shown in FIGs. 1, 2, and 6. The lower segment 32L, the front wall 30, the left side wall 34, and the right side wall 36 cooperate to define the holding volume 18. The upper segment 32U extends laterally away from the lower segment 32L towards the front wall 30. An inner edge 32E of the upper segment 32U cooperates with upper edges 30E, 34E, 36E of the front wall 30, the left side wall 34, and the right side wall 36, respectively, to define an opening 21 of the food-storage compartment 20. The upper segment 32U includes an inner surface 33 that faces the base wall 28 and an outer surface 35 opposite the inner surface 33 as shown in FIGs. 4 and 5.

The food-storage container 12 further includes at least one tray 38 configured to rest within the food-storage compartment 20 and hold food as shown in FIGs. 1-3. In other embodiments, food may be held in the food-storage compartment 20 without the at least one tray 38. The present disclosure includes the food-storage container 12 as described herein, but in some embodiments, the food-storage container 12 may further include features similar to those disclosed in U.S. Patent Application No. 18/633,057, filed April 11, 2024, titled "DUAL FLOW HOLDING CONTAINER," and incorporated by reference herein for the disclosure of the container.

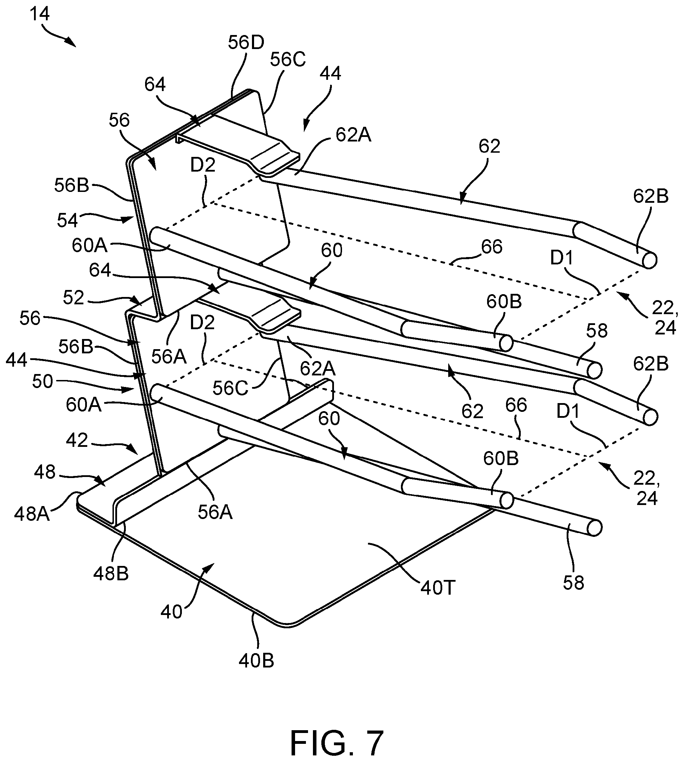

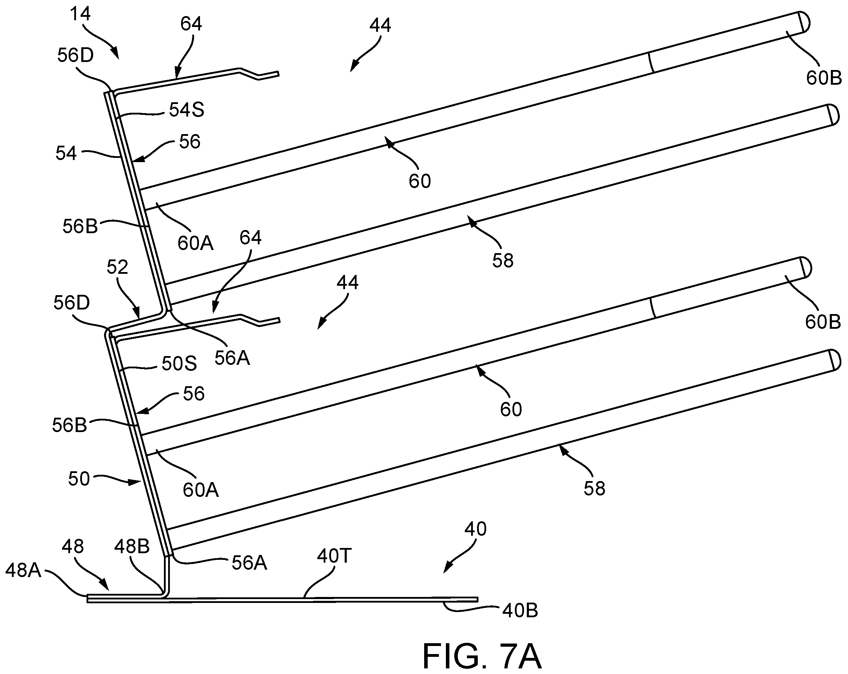

The removable food-package holders 14 each include a magnetic or ferrous base 40, a support foundation 42, and package retainers 44 that define the food-package receiving spaces 22 to provide the food-package compartments 24 as shown in FIGs. 7-11. The magnetic or ferrous base 40 is configured to selectively couple to the upper segment 32U of the rear wall 32 via the magnetic force provided by the package-holder coupler 16. The support foundation 42 is coupled to the magnetic or ferrous base 40 to extend outwardly away from the magnetic or ferrous base 40. The package retainers 44 are coupled to the support foundation 42 to extend away from the support foundation 42. In the illustrative embodiments, each removable food-package holder 14 includes two package retainers 44. In other embodiments, the removable food-package holders 14 may each have only one package retainer 44 or more than two package retainers 44. In some embodiments, different removable food-package holders 14 may have one more package retainers 44.

The magnetic or ferrous base 40 comprises a magnetic or ferrous material, including but not limited to stainless steel grade/type 430. The support foundation 42 and the package retainers 44 comprise non-magnetic materials, including but not limited to stainless steel or more specifically stainless steel grade/type 301. Accordingly, when the removable food-package holder 14 is placed on the food-storage container 12, only the magnetic or ferrous base 40 is attracted to the magnetic force provided by the package-holder coupler 16. The magnetic or ferrous base 40 is configured to be maintained in place when one or magnets or a source of a magnetic force is positioned within close proximity to a bottom surface 40B of the magnetic or ferrous base 40. The term close proximity is defined to be within a range that magnetic flux eminates from the magnets 70 (discussed below) that cause attraction by the magnetic or ferrous base 40. In some embodiments, close proximity is within ¼ of an inch, 1/8^{th} of an inch, 1/16^{th}, or 1/32^{nd} of an inch.

The support foundation 42 includes a base segment 48, a lower segment 50 coupled to the base segment 48, an intermediate segment 52 coupled to the lower segment 50, and an upper segment 54 coupled to the intermediate segment 52 as shown in FIGs. 7-11. The base segment 48 is coupled to a top surface 40T of the magnetic or ferrous base 40 and extends between a first end 48A and a second end 48B. The lower segment 50 is coupled to and extends upwardly and laterally away from the second end 48B in the direction of the first end 48A. The intermediate segment 52 extends upwardly and laterally away from the lower segment 50 in the direction of the second end 48B of the base segment 48. The upper segment 54 extends upwardly and laterally away from the intermediate segment 52 in the direction of the first end 48A of the base segment 48. Accordingly, the support foundation 42 provides a "stacked" arrangement such that intermediate segment 52 is substantially perpendicular to the lower and upper segments 50, 54 and the lower and upper segments 50, 54 are substantially parallel to each other.

Each package retainer 44 includes a retainer base 56, a lower guide rod 58, a first lateral guide rod 60, a second lateral guide rod 62, and an end-package grip 64 as shown in FIGs. 7-11. The retainer base 56 is coupled to one of the lower segment 50 and the upper segment 52 of the support foundation 42 to support the guide rods 58, 60, 62 and the end-package grip 64. The guide rods 58, 60, 62 and the end-package grip 64 are coupled to and extend outwardly from the retainer base 56. In the illustrative embodiment, the retainer base 56 is sized to cover a retainer-facing surface 50S, 54S of the respective lower or upper segment 50, 54. In other embodiments, the retainer base 56 may be smaller than the retainer-facing surfaces 50S, 54S, or the guide rods 58, 60, 62 and the end-package grip 64 may be coupled directly to the lower and/or upper segment 50, 54.

The guide rods 58, 60, 62 and the end-package grip 64 cooperate to define the respective food-package receiving space 22 and food-package compartment 24 as shown in FIGs. 7-11. The lower guide rod 58 is coupled to a lower end 56A of the respective retainer base 56. The first lateral guide rod 60 is coupled to a first lateral end 56B of the respective retainer base 56 and the second lateral guide rod 62 is coupled to a second lateral end 56C of the respective retainer base 56. Both lateral guide rods 60, 62 are spaced apart upwardly from the lower guide rod 58. The end-package grip 64 is coupled to an upper end 56D of the respective retainer base 56 to extend away laterally from the retainer base 56. The first lateral guide rod 60, and the second lateral guide rod 62 are substantially parallel to the lower guide rod 58. The first lateral guide rod 60 is also substantially parallel to the second lateral guide rod 62.

The guide rods 58, 60, 62 and the end-package grip 64 cooperate to define a central axis 66 of the food-package receiving space 22 as shown in FIGs. 7-11. The lateral guide rods 60, 62 each have a first end 60A, 62A coupled to the respective retainer base 56 and a second end 60B, 62B that extends radially inward towards the central axis 66. Accordingly, a distance D1 between the second ends 60B, 62B is less than a distance D2 between the first ends 60A, 62A.

The end-package grip 64 extends radially inward towards the central axis 66 such that the end-package grip is not exactly parallel to the lower guide rod 58 as shown in FIGs. 7-11. As such, when a stack of food packages 26 is placed in the food-package compartment 24, the end-package grip 64 engages an end package 26E of the stack of food packages 26 and exerts a downward force onto the stack of food packages 26 towards the lower guide rod 58 so that the stack of food packages 26 are retained in the food-package compartment 24.

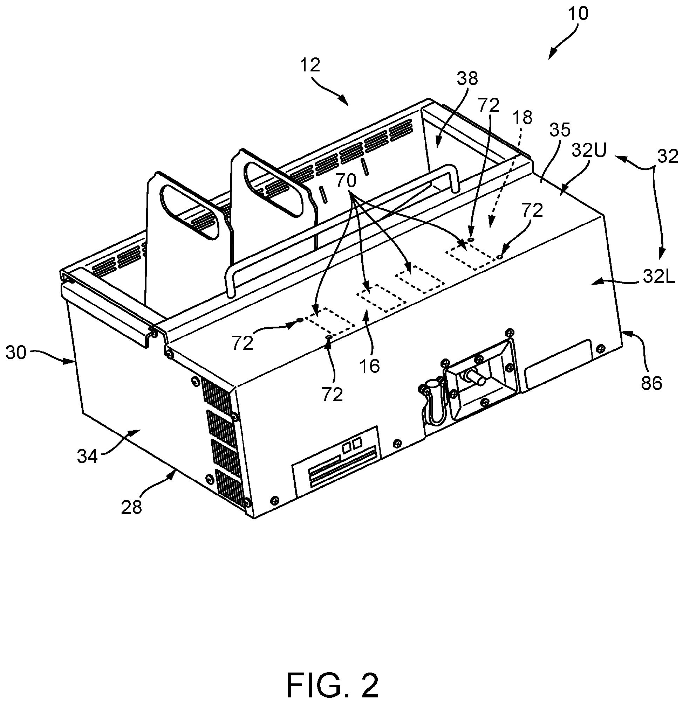

Referring back to FIGs. 2-5, the package-holder coupler 16 is configured to provide a magnetic force to couple the food-package holder 14 to the upper segment 32U of the rear wall 32 after the food-package holder 14 is placed on the upper segment 32U and/or while the food-package holder 14 retains one or more packages 26 in the food-package compartment 24. Accordingly, the food-package holder 14 is retained to the food-storage container 12 with the magnetic force and/or a user can remove a package 26 of the one or more packages 26 from the food-package compartment 24 and displace food located in the food-storage compartment 20 into the package 26 removed from the food-package compartment 24 within the footprint of the food-storage container 12. While the present disclosure has the food-package holder 14 being coupled to the upper segment 32U of the rear wall 32 via the magnetic force of the package-holder coupler 16, a person having ordinary skill in the art would understand that the package-holder coupler 16 may be moved to any wall of the food-storage container to couple the food-package holder 14 to that respective wall, and select the magnets 70 (size, number, grade, remanence, coercivity, and energy-product) that would be sufficient to retain the base 40 in place when holding the maximum number of packages 26 within the gravitational field.

The package-holder coupler 16 includes a magnet-support body 68, magnets 70, and fasteners 72 as shown in FIGs. 2-5. The magnet-support body 68 is arranged within the holding volume 18 between the inner surface 33 of the upper segment 32U and the base wall 28. The magnets 70 are located between the magnet-support body 68 and the inner surface 33 of the upper segment 32U. The magnet-support body 68 comprises non-magnetic material and as described above, the rear wall 32 comprises non-magnetic material. Accordingly, the magnets 70 provide the magnetic force through the upper segment 32U (which may be a non-magnetic material, such as 301 stainless steel) to couple the magnetic or ferrous base 40 of the food-package holder 14 to the outer surface 35 of the upper segment 32U. The fasteners 72 couple the magnet-support body 68 to the upper segment 32U such that the heads of the fasteners 72 are flush with the outer surface 35, and to maintain close contact between the upper segment 32U and the magnets 70 to minimize the distance that the magnetic force needs to travel to extend above the outer surface 35 of the upper segment 32U (to interact with the base 40 when properly positioned). For example, the fasteners 72 may be PEM^{®} studs.

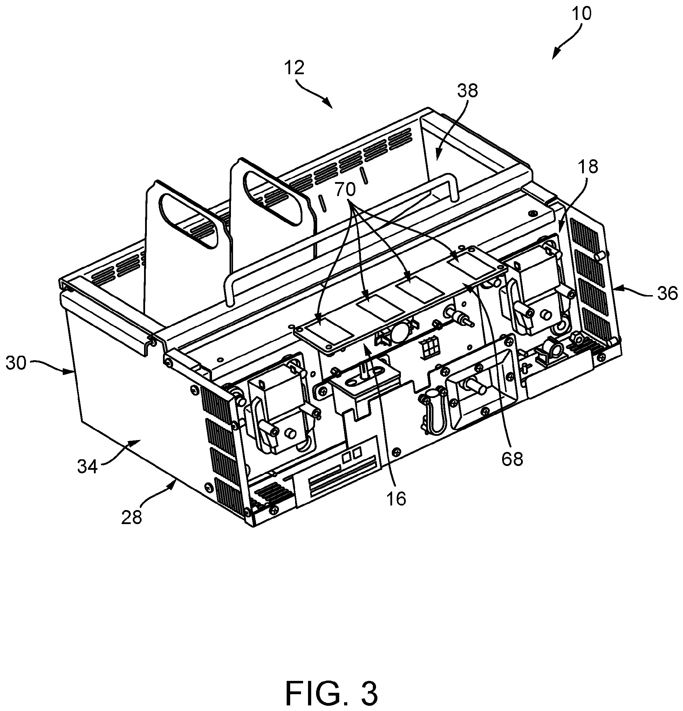

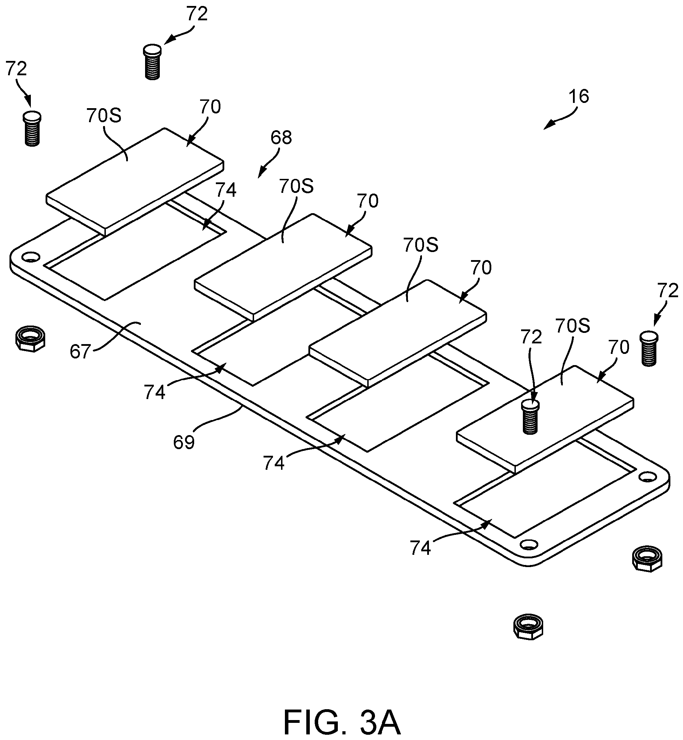

The magnet-support body 68 includes an outer surface 67 facing the inner surface 33 of the upper segment 32U and an inner surface 69 facing the base wall 28 as shown in FIGs. 3-5. The magnet-support body 68 is formed to include magnet-receiving slots 74 that extend into the magnet-support body 68 from the outer surface 37 and toward the inner surface 39. The outer surface 67 of the magnet-support body 68 is spaced apart from the inner surface 33 of the upper segment 32U.

The magnets 70 are each located within a respective magnet-receiving slot 74 as shown in FIGs. 3-5. Outer surfaces 70S of the magnets 70 engage the inner surface 32IS of the upper segment 32U such that the outer surfaces 70S are spaced apart from the outer surface 67 of the magnet-support body 68. The magnets 70 may be permanent magnets. For example, the magnets 70 may comprise, including but not limited to, neodymium iron boron (NdFeB), samarium cobalt (SmCo), alnico (aluminum, nickel, cobalt), and ferrite or ceramic (sintered iron oxide and barium or strontium carbonate).

The magnets 70 may have a grade of about 35 MGOe. Additionally, the magnets 70 may have a grade strong enough to hold each food-package holder 14 in place against the torque provided by the center of gravity of the food-package holder 14 having a maximum amount of packages 26 in the food-package compartments 24. As such, the magnets 70 have a grade to accommodate a maximum package weight such that the food-package holder 14 is not displaced from the outer surface 32OS of the upper segment 32U due to the weight of the packages 26. One of ordinary skill with a thorough review and understanding of this specification would readily be able to select the size and strength of the magnets 70 that would be needed in order to provide a magnetic coupling with the base 40 to keep the holder 14 in position when the holder is fully loaded with packages 26 with merely routine testing and optimization. For example, the magnets 70 may have a pull force of about 21-22 lb. More specifically, the magnets 70 may have a pull force of about 21.76 lb.

In the illustrative embodiment, the package-holder coupler 16 has four magnets 70 to accommodate two removable food-package holders 14. A person having ordinary skill in the art would understand that the package-holder coupler 16 may have only one magnet 70, less than four magnets 70, or more than four magnets 70 to accommodate one removable food-package holder 14 or more than two removable food-package holders 14. In other embodiments, the package-holder coupler 16 may not have a magnet-support body 68 and may instead be one or more magnets 70 coupled to an inner surface of a respective wall of the food-storage container 12.

Additionally, the food service station 10 may have more than one package-holder coupler 16 on the same wall or different walls of the food-storage container 12. Similarly, the package-holder coupler 16 may be placed underneath a non-magnetic tabletop or countertop so that a food-package holder 14 may be coupled to the non-magnetic tabletop or countertop with the magnetic force provided by the magnets.

In the illustrative embodiment, the removable food-package holder 14 includes a magnetic base 40 and the package-holder coupler 16 includes magnets 70 to provide the magnetic force to couple the removable food-package holder 14 to the food-storage container 12. In other embodiments, the package-holder coupler 16 may comprise ferrous or magnetic materials and may not include magnets 70. In such embodiments, the base 40 of the removable food-package holder 14 may be a magnet, such as a permanent magnet comprising materials as described above. Accordingly, the food-package holder 14 would provide the magnetic force and would attract to the package-holder coupler 16 to couple the removable package holder 14 to the food-storage container 12.

The term "about" is specifically defined herein to include a range that includes the reference value and plus or minus 5% of the reference value. The term "substantially the same" is satisfied when the width of the end surfaces of the holes are both within the above range. The term "substantially parallel" is satisfied when the two items being compared are exactly parallel or disposed with an angle between the two of less than 5 or 10 degrees. The items being compared may be substantially parallel and have planar shapes, as well as when the items are generally planar (i.e. they extend along a plane but have one or more portions that do not extend within the plane), such as items with portions of relatively minor curvature or interior angles where a plane can be readily fit along the item between its end portions and through a significant percentage of the item. The term "overwhelming majority" is defined herein to mean 80% or more (and including all) of the items within the group being described.

While the preferred embodiments of the disclosed have been described, it should be understood that the invention is not so limited and modifications may be made without departing from the disclosure. The scope of the disclosure is defined by the appended claims, and all devices that come within the meaning of the claims, either literally or by equivalence, are intended to be embraced therein.

The specification and be readily understood with reference to the following representative paragraphs:
Representative Paragraph 1: A food service station, comprising:
   a food-storage container including a base wall and one or more side walls coupled to the base wall to extend upwardly away from the base wall and spaced from a center of the base wall to define a holding volume configured to provide a food-storage compartment,
   a removable food-package holder including a magnetic base, a support foundation coupled to the magnetic base to extend outwardly away from the magnetic base, and a package retainer coupled to the support foundation to extend away from the support foundation, the package retainer defining a food-package receiving space to provide a food-package compartment, and
   a package-holder coupler configured to provide a magnetic force to couple the food-package holder to a side wall of the one or more side walls after the food-package holder is placed on the side wall of the one or more side walls so that the food-package holder is retained to the food-storage container with the magnetic force.
Representative Paragraph 2: The food service station of Representative Paragraph 1, wherein the package-holder coupler includes a magnet-support body arranged within the holding volume and at least one magnet located between the magnet-support body and an inner surface of the side wall of the one or more side walls.
Representative Paragraph 3: The food service station of Representative Paragraph 2, wherein the side wall of the one or more side walls of the food-storage container comprises non-magnetic material such that the at least one magnet provides the magnetic force through the side wall of the one or more side walls to couple the magnetic base of the food-package holder to an outer surface of the side wall of the one or more side walls.
Representative Paragraph 4: The food service station of Representative Paragraph 3, wherein the at least one magnet engages the inner surface of the side wall of the one or more side walls.
Representative Paragraph 5: The food service station of any one of Representative Paragraphs 2-4, wherein the at least one magnet is a permanent magnet.
Representative Paragraph 6: The food service station of any one of Representative Paragraphs 2-5, wherein the magnet-support body includes an outer surface facing the side wall of the one or more sidewalls and an inner surface opposite the outer surface, the magnet-support body being formed to include a magnet-receiving slot that extends into the magnet-support body from the outer surface toward the inner surface and at least a portion of the at least one magnet is received in the magnet-receiving slot.
Representative Paragraph 7: The food service station of Representative Paragraph 6, wherein an outer surface of the at least one magnet engages the inner surface of the side wall of the one or more side walls.
Representative Paragraph 8: The food service station of any one of Representative Paragraphs 2-7, wherein the package-holder coupler further includes at least one fastener configured to couple the magnet-support body to the side wall of the one or more sidewalls and the outer surface of the magnet-support body is spaced apart from the inner surface of the side wall of the one or more side walls.
Representative Paragraph 9: The food service station of any one of Representative Paragraphs 1-8, wherein the package retainer includes a retainer base coupled to the support foundation and a plurality of guide rods coupled to the retainer base to extend away from the retainer base, the plurality of guide rods arranged to define the food-package receiving space.
Representative Paragraph 10: The food service station of any one of Representative Paragraphs 1-9, wherein the package retainer is a first package retainer and the removable food-package holder includes a second package retainer coupled to the support foundation such that the removable food-package holder provides two food-package compartments.
Representative Paragraph 11: A food service station comprising:
   a food-storage container including a base wall and a front wall, a rear wall, a left side wall, and a right side wall coupled to the base wall to extend upwardly away from the base wall and spaced from a center of the base wall to define a holding volume configured to provide a food-storage compartment, wherein the rear wall includes a lower segment coupled to the base wall to extend upwardly away from the base wall and an upper segment coupled to the lower segment to extend laterally away from the lower segment towards the front wall, an inner edge of the upper segment cooperating with upper edges of the front wall, the left side wall, and the right side wall to define an opening of the food-storage compartment,
   a removable food-package holder including a magnetic base, a support foundation coupled to the magnetic base to extend upwardly away from the magnetic base, and a package retainer coupled to the support foundation to extend away from the support foundation, the package retainer defining a food-package receiving space to provide a food-package compartment, and
   a package-holder coupler configured to provide a magnetic force to couple the food-package holder to the upper segment of the rear wall while the food-package holder retains one or more packages in the food-package compartment so that a user can remove a package of the one or more packages from the food-package compartment and displace food located in the food-storage compartment into the package removed from the food-package department within a footprint of the food-storage container.
Representative Paragraph 12: The food service station of Representative Paragraph 11, wherein the package retainer includes a retainer base coupled to the support foundation and a plurality of guide rods coupled to the retainer base to extend away laterally from the retainer base, the plurality of guide rods arranged to define the food-package receiving space.
Representative Paragraph 13: The food service station of Representative Paragraph 12, wherein the plurality of guide rods includes a lower guide rod coupled to a lower end of the retainer base, a first lateral guide rod coupled to a first lateral end of the retainer base, and a second lateral guide rod coupled to a second lateral end of the retainer base such that the plurality of guide rods cooperate to define a central axis of the food-package receiving space, the first lateral guide rod and the second lateral guide rod being spaced apart upwardly from the lower guide rod.
Representative Paragraph 14: The food service station of Representative Paragraph 13, wherein the first and the second lateral guide rod each have a first end coupled to the retainer base and a second end extending radially inward towards the central axis such that a distance between the second ends of the first and the second lateral guide rods is less than a distance between the first ends of the first and the second lateral guide rods.
Representative Paragraph 15: The food service station of any one of Representative Paragraphs 12-14, wherein the package retainer further includes an end-package grip coupled to an upper end of the retainer base to extend away laterally from the retainer base.
Representative Paragraph 16: The food service station of any one of Representative Paragraphs 11-15, wherein the package-holder coupler includes a magnet-support body arranged between the upper segment of the rear wall and the base and at least one magnet located between the magnet-support body and an inner surface of the upper segment of the rear wall.
Representative Paragraph 17: The food service station of Representative Paragraph 16, wherein the rear wall comprises non-magnetic material such that the at least one magnet provides the magnetic force through the upper segment of the rear wall to couple the magnetic base of the food-package holder to an outer surface of the upper segment of the rear wall.
Representative Paragraph 18: The food service station of either one of Representative Paragraphs 16 or 17, wherein the at least one magnet is a permanent magnet.
Representative Paragraph 19: The food service station of any one of Representative Paragraphs 16-18, wherein the at least one magnet engages the inner surface of the upper segment of the rear wall.
Representative Paragraph 20: The food service station of Representative Paragraph 20, wherein the magnet-support body includes an outer surface facing the upper segment of the rear wall and an inner surface opposite the outer surface, and wherein the package-holder coupler further includes at least one fastener configured to couple the magnet-support body to the upper segment of the rear wall and the outer surface of the magnet-support body is spaced apart from the inner surface of the upper segment of the rear wall.
Representative Paragraph 21: A food-package holder comprising:
   a ferrous base,
   a support foundation coupled to the ferrous base to extend outwardly away from the ferrous base, and
   a package retainer coupled to the support foundation to extend away from the support foundation, the package retainer defining a food-package receiving space to provide a food-package compartment.
Representative Paragraph 22: The food-package holder of Representative Paragraph 21, wherein the ferrous base is configured to be maintained in place when one or more magnets are positioned between 1/32^{nd} of an inch and 1/4^{th} of an inch from a bottom surface of the ferrous base.
Representative Paragraph 23: The food-package holder of either one of Representative Paragraphs 21 or 22, wherein the package retainer includes a retainer base coupled to the support foundation and a plurality of guide rods coupled to the retainer base to extend away from the retainer base, the plurality of guide rods arranged to define the food-package receiving space.
Representative Paragraph 24: The food-package holder of Representative Paragraph 23, wherein the plurality of guide rods includes a lower guide rod coupled to a lower end of the retainer base, a first lateral guide rod coupled to a first lateral end of the retainer base, and a second lateral guide rod coupled to a second lateral end of the retainer base such that the plurality of guide rods cooperate to define a central axis of the food-package receiving space, the first lateral guide rod and the second lateral guide rod being spaced apart upwardly from the lower guide rod.
Representative Paragraph 25: The food-package holder of Representative Paragraph 24, wherein the first and the second lateral guide rod each have a first end coupled to the retainer base and a second end extending radially inward towards the central axis such that a distance between the second ends of the first and the second lateral guide rods is less than a distance between the first ends of the first and the second lateral guide rods.
Representative Paragraph 26: The food-package holder of any one of Representative Paragraphs 23-25, wherein the package retainer further includes an end-package grip coupled to an upper end of the retainer base to extend away laterally from the retainer base.
Representative Paragraph 27: The food-package holder of any one of Representative Paragraphs 21-26, herein the package retainer is a first package retainer and the removable food-package holder includes a second package retainer coupled to the support foundation such that the removable food-package holder provides two food-package compartments.

## Claims

1. A food service station comprising:
a food-storage container including a base wall and one or more side walls coupled to the base wall to extend from the base wall and spaced from a center of the base wall to define a holding volume configured to provide a food-storage compartment,
a removable food-package holder including a magnetic base, a support foundation coupled to the magnetic base to extend outwardly away from the magnetic base, and a package retainer coupled to the support foundation to extend away from the support foundation, the package retainer defining a food-package receiving space to provide a food-package compartment, and
a package-holder coupler configured to provide a magnetic force to couple the food-package holder to a side wall of the one or more side walls after the food-package holder is placed on the side wall of the one or more side walls so that the food-package holder is retained to the food-storage container with the magnetic force.

2. The food service station of claim 1, wherein the package-holder coupler includes a magnet-support body arranged within the holding volume and at least one magnet located between the magnet-support body and an inner surface of the side wall of the one or more side walls.

3. The food service station of claim 2, wherein the side wall of the one or more side walls of the food-storage container comprises non-magnetic material such that the at least one magnet provides the magnetic force through the side wall of the one or more side walls to couple the magnetic base of the food-package holder to an outer surface of the side wall of the one or more side walls.

4. The food service station of claim 2, wherein the magnet-support body includes an outer surface facing the side wall of the one or more sidewalls and an inner surface opposite the outer surface, the magnet-support body being formed to include a magnet-receiving slot that extends into the magnet-support body from the outer surface toward the inner surface and at least a portion of the at least one magnet is received in the magnet-receiving slot,
for example wherein the package-holder coupler further includes at least one fastener configured to couple the magnet-support body to the side wall of the one or more sidewalls and the outer surface of the magnet-support body is spaced apart from the inner surface of the side wall of the one or more side walls.

5. The food service station of claim 1, wherein the package retainer includes a retainer base coupled to the support foundation and a plurality of guide rods coupled to the retainer base to extend away from the retainer base, the plurality of guide rods arranged to define the food-package receiving space.

6. The food service station of claim 1, wherein the package retainer is a first package retainer and the removable food-package holder includes a second package retainer coupled to the support foundation such that the removable food-package holder provides two food-package compartments.

7. A food service station comprising:
a food-storage container including a base wall and a front wall, a rear wall, a left side wall, and a right side wall coupled to the base wall to extend from the base wall and spaced from a center of the base wall to define a holding volume configured to provide a food-storage compartment, wherein the rear wall includes a lower segment coupled to the base wall to extend upwardly away from the base wall and an upper segment coupled to the lower segment to extend laterally away from the lower segment towards the front wall, an inner edge of the upper segment cooperating with upper edges of the front wall, the left side wall, and the right side wall to define an opening of the food-storage compartment,
a removable food-package holder including a magnetic base, a support foundation coupled to the magnetic base to extend upwardly away from the magnetic base, and a package retainer coupled to the support foundation to extend away from the support foundation, the package retainer defining a food-package receiving space to provide a food-package compartment, and
a package-holder coupler configured to provide a magnetic force to couple the food-package holder to the upper segment of the rear wall while the food-package holder retains one or more packages in the food-package compartment so that a user can remove a package of the one or more packages from the food-package compartment and displace food located in the food-storage compartment into the package removed from the food-package department within a footprint of the food-storage container.

8. The food service station of claim 7, wherein the package retainer includes a retainer base coupled to the support foundation and a plurality of guide rods coupled to the retainer base to extend away laterally from the retainer base, the plurality of guide rods arranged to define the food-package receiving space,
for example wherein the plurality of guide rods includes a lower guide rod coupled to a lower end of the retainer base, a first lateral guide rod coupled to a first lateral end of the retainer base, and a second lateral guide rod coupled to a second lateral end of the retainer base such that the plurality of guide rods cooperate to define a central axis of the food-package receiving space, the first lateral guide rod and the second lateral guide rod being spaced apart upwardly from the lower guide rod,
for example, wherein either:
(a) the first and the second lateral guide rod each have a first end coupled to the retainer base and a second end extending radially inward towards the central axis such that a distance between the second ends of the first and the second lateral guide rods is less than a distance between the first ends of the first and the second lateral guide rods; or
(b) the package retainer further includes an end-package grip coupled to an upper end of the retainer base to extend away laterally from the retainer base.

9. The food service station of claim 8, wherein the package-holder coupler includes a magnet-support body arranged between the upper segment of the rear wall and the base wall and at least one magnet located between the magnet-support body and an inner surface of the upper segment of the rear wall,
optionally wherein either:
(a) the rear wall comprises non-magnetic material such that the at least one magnet provides the magnetic force through the upper segment of the rear wall to couple the magnetic base of the food-package holder to an outer surface of the upper segment of the rear wall; or
(b) the at least one magnet engages the inner surface of the upper segment of the rear wall, wherein the magnet-support body includes an outer surface facing the upper segment of the rear wall and an inner surface opposite the outer surface, and wherein the package-holder coupler further includes at least one fastener configured to couple the magnet-support body to the upper segment of the rear wall and the outer surface of the magnet-support body is spaced apart from the inner surface of the upper segment of the rear wall.

10. A food-package holder comprising:
a ferrous base,
a support foundation coupled to the ferrous base to extend outwardly away from the ferrous base, and
a package retainer coupled to the support foundation to extend away from the support foundation, the package retainer defining a food-package receiving space to provide a food-package compartment.

11. The food-package holder of claim 10, wherein the ferrous base is configured to be maintained in place when one or more magnets are positioned between 1/32^{nd} of an inch and 1/4^{th} of an inch from a bottom surface of the ferrous base.

12. The food-package holder of claim 10, wherein the package retainer includes a retainer base coupled to the support foundation and a plurality of guide rods coupled to the retainer base to extend away from the retainer base, the plurality of guide rods arranged to define the food-package receiving space,
for example wherein the plurality of guide rods includes a lower guide rod coupled to a lower end of the retainer base, a first lateral guide rod coupled to a first lateral end of the retainer base, and a second lateral guide rod coupled to a second lateral end of the retainer base such that the plurality of guide rods cooperate to define a central axis of the food-package receiving space, the first lateral guide rod and the second lateral guide rod being spaced apart upwardly from the lower guide rod.

13. The food-package holder of claim 12, wherein the first and the second lateral guide rod each have a first end coupled to the retainer base and a second end extending radially inward towards the central axis such that a distance between the second ends of the first and the second lateral guide rods is less than a distance between the first ends of the first and the second lateral guide rods.

14. The food-package holder of claim 12, wherein the package retainer further includes an end-package grip coupled to an upper end of the retainer base to extend away laterally from the retainer base.

15. The food-package holder of claim 10, wherein the package retainer is a first package retainer and the removable food-package holder includes a second package retainer coupled to the support foundation such that the removable food-package holder provides two food-package compartments.
